(19)

**Europäisches Patentamt**
**European Patent Office**
**Office européen des brevets**

(11)　**EP 4 585 482 A1**

(12)　# EUROPEAN PATENT APPLICATION

(43) Date of publication:
　16.07.2025　Bulletin 2025/29

(21) Application number: 24216845.8

(22) Date of filing: 02.12.2024

(51) International Patent Classification (IPC):
　**B60W 40/064** (2012.01)　　**B60W 40/10** (2012.01)
　**B60W 40/12** (2012.01)

(52) Cooperative Patent Classification (CPC):
　**B60W 40/064; B60T 8/17551; B60T 8/58;**
　**B60T 17/22; B60W 40/1005; B60W 40/12;**
　B60T 2260/08; B60T 2270/86; B60W 2050/0031;
　B60W 2510/0638; B60W 2510/1005;
　B60W 2520/10; B60W 2520/105; B60W 2520/125;
　B60W 2520/14;　　　　　　　　　　(Cont.)

(84) Designated Contracting States:
　**AL AT BE BG CH CY CZ DE DK EE ES FI FR GB**
　**GR HR HU IE IS IT LI LT LU LV MC ME MK MT NL**
　**NO PL PT RO RS SE SI SK SM TR**
　Designated Extension States:
　**BA**
　Designated Validation States:
　**GE KH MA MD TN**

(30) Priority:　**12.12.2023　US 202363608866 P**
　　　　　　　**01.10.2024　US 202418903142**

(71) Applicant: **The Goodyear Tire & Rubber Company**
　**Akron, OH 44316 (US)**

(72) Inventors:
　• **LABELLA, Mario**
　　**L-8606 Bettborn (LU)**
　• **BALAGA, Sanjay Raghav**
　　**L-2716 Luxembourg (LU)**
　• **SINGH, Kanwar Bharat**
　　**Copley, Ohio, 44321 (US)**

(74) Representative: **Kutsch, Bernd**
　**Goodyear S.A.**
　**Patent Department**
　**Avenue Gordon Smith**
　**7750 Colmar-Berg (LU)**

(54)　## SYSTEM AND METHOD FOR HYDROPLANING DETECTION

(57)　A system and method of vehicle hydroplaning detection is described. Dynamic vehicle parameter values are received by a hydroplaning computation device from a Controller Area Network (CAN) bus of a vehicle. The dynamic vehicle parameter values are measured using vehicle CAN bus sensor devices. A plurality of static vehicle parameter values are identified for the vehicle. A tire-model-based slip value, a grip utilization value, a drag force value, and wheel-speed-based slip value are generated. The hydroplaning computation device outputs hydroplaning detection status data based on a vehicle model, the dynamic vehicle parameter values, and the static vehicle parameter values.

FIG. 5

**(Cont. next page)**

EP 4 585 482 A1

(52) Cooperative Patent Classification (CPC): (Cont.)
B60W 2520/26; B60W 2520/28; B60W 2530/00;
B60W 2530/10; B60W 2530/201; B60W 2540/10;
B60W 2540/12; B60W 2540/14; B60W 2540/18

**Description**

BACKGROUND

Vehicles can experience a number of conditions that affect vehicle performance and safety. One condition that can affect vehicle performance and safety is hydroplaning. Hydroplaning occurs when a layer of water between the tires and the road causes a vehicle's tires lose contact with the road surface. This can cause steering and braking ineffectiveness as well as other loss-of-control scenarios. If a driver knows that hydroplaning is occurring, this can help to prevent loss of vehicle control and to avoid potentially hazardous situations. The driver can respond appropriately to prevent accidents and collisions. Identifying hydroplaning can mean the difference between safely navigating the road and losing control of the vehicle.

While vehicles can include antilock braking systems (ABS) that can help to prevent wheel lockup during hard braking in slippery and wet conditions, these systems do not directly detect hydroplaning. Some systems can detect hydroplaning using tire-specific sensors or other bespoke sensors, but many vehicles lack the appropriate sensors for these existing systems. As a result, there is a need in the art for a system and method that is better in practice than existing systems and accurately and reliably detects hydroplaning.

SUMMARY OF THE INVENTION

The invention relates to a system in accordance with claim 1, to a method in accordance with claim 7 and to a non-transitory computer readable medium in accordance with claim 13.

Dependent claims refer to preferred embodiments of the invention.

BRIEF DESCRIPTION OF THE DRAWINGS

Aspects of the present disclosure can be better understood with reference to the following drawings. It is noted that the elements in the drawings are not necessarily drawn to scale, with emphasis instead being placed upon clearly illustrating the principles of the embodiments. In the drawings, like reference numerals designate like or corresponding, but not necessarily the same, elements throughout the several views.

FIG. 1 illustrates an example of a networked environment for a hydroplaning detection system, according to various aspects of the embodiments of the present disclosure.

FIG. 2 illustrates an example of the operational principles of vehicle hydroplaning in terms of parameters monitored by the hydroplaning detection system, according to various aspects of the embodiments of the present disclosure.

FIGS. 3 and 4 illustrate examples of tire-level operational principles of vehicle hydroplaning in terms of parameters utilized by the hydroplaning detection system, according to various aspects of the embodiments of the present disclosure.

FIG. 5 illustrates an example of a hydroplaning detection device of a hydroplaning detection system, according to various aspects of the embodiments of the present disclosure.

FIG. 6 illustrates an example of the operation of a vehicle model component of a hydroplaning detection device, according to various aspects of the embodiments of the present disclosure.

FIGS. 7A-7B illustrate an example of the operation of a detection logic component of a hydroplaning detection device, according to various aspects of the embodiments of the present disclosure.

FIGS. 8, 9, and 10 illustrates examples of components that adapt a hydroplaning detection device for rear wheel drive and all-wheel drive vehicles, according to various aspects of the embodiments of the present disclosure.

FIG. 11 illustrates an example of a hydroplaning detection control system of a hydroplaning detection system, according to various aspects of the embodiments of the present disclosure.

FIG. 12 illustrates an example of a vehicle mass estimator component of a hydroplaning detection system, according to various aspects of the embodiments of the present disclosure.

FIG. 13 illustrates an example computing device for the tire sensor position detection system, according to various aspects of the embodiments of the present disclosure.

DETAILED DESCRIPTION OF PREFERRED EMBODIMENTS

The present disclosure describes systems and methods for hydroplaning detection. As outlined above, vehicles can experience hydroplaning when a layer of water between the tires and the road causes a vehicle's tires lose contact with the road surface. This can cause steering and braking ineffectiveness as well as other loss-of-control scenarios. While vehicles can include antilock braking systems (ABS) that can help to prevent wheel lockup during hard braking in slippery and wet conditions, these systems do not directly detect hydroplaning. Some systems can detect hydroplaning using tire-specific sensors or other bespoke sensors, but many vehicles lack the appropriate sensors for these existing systems. As a result, there is a need in the art for mechanisms that provide benefits over existing systems for reliably detecting hydroplaning in vehicle operation.

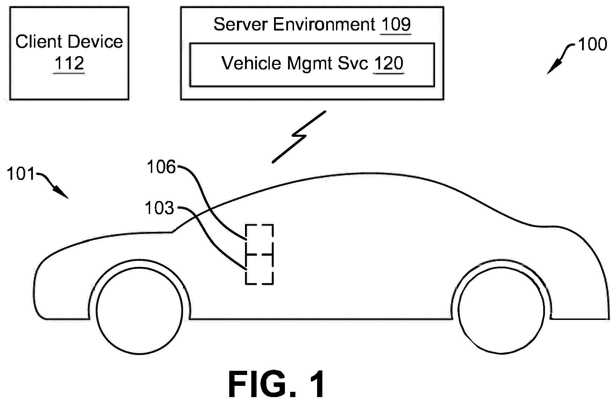

FIG. 1 shows a hydroplaning detection system 100. The hydroplaning detection system 100 can include a vehicle 101, Controller Area Network (CAN) bus sensor devices 103, a hydroplaning computation device 106 such as a vehicle-mounted or vehicle-borne computing device deployed to a vehicle 101, and a server environment 109. These components can communicate with one another through one or more networks. In some examples, the hydroplaning computation device 106 can generate, facilitate, or maintain a network to which the CAN bus sensor devices 103 connect. The term "CAN bus" can be an abbreviation for controller area network or controller area network bus.

The networks can include local area networks (LANs), wide area networks (WANs), and other networks. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (i.e., WI-FI®), BLUETOOTH® networks, microwave transmission networks, as well as other networks relying on radio broadcasts. The networks can also include a combination of two or more networks. Examples of networks can include the Internet, intranets, extranets, virtual private networks (VPNs), and similar networks.

A vehicle 101 can include any drive type such as front wheel drive, rear wheel drive, all wheel or four wheel drive, and other types of vehicle drive types. The vehicle 101 can include a sedan, hatchback, van, truck, sport utility vehicle, or any other kind of vehicle. The mechanisms described can operate for vehicles 101 that include an internal combustion engine drive system, an electric drive system, or any combination thereof.

Each CAN bus sensor device 103 can include to one or more sensors that respectively identify values corresponding to multiple different parameters. The CAN bus sensor devices 103 can include any number of devices that monitor aspects of the vehicle 101. For example, a CAN bus sensor device 103 can include an Engine Control Module (ECM) can measure engine parameters such as RPM, temperature, and emissions. A CAN bus sensor device 103 can include a Transmission Control Module (TCM) that measures transmission operation for the vehicle 101, including gear shifting, clutch operation and position (e.g., engaged, disengaged), and others. A CAN bus sensor device 103 can include a Throttle Position Sensor (TPS) that measures throttle driver throttle input position. A CAN bus sensor device 103 can include a wheel speed sensor that measures wheel speed. The wheel speed sensor can be included in an Antilock Braking Sensor (APS) device or can be separate. A CAN bus sensor device 103 can include a Mass Air Flow (MAF) sensor that measures the amount of air entering the engine. A CAN bus sensor device 103 can include a Manifold Absolute Pressure (MAP) sensor that measures intake manifold pressure. A CAN bus sensor device 103 can include a Vehicle Speed Sensor (VSS) that measures vehicle speed. A CAN bus sensor device 103 can include a Crankshaft Position Sensor (CPS) that measures the crankshaft's position for ignition timing. A CAN bus sensor device 103 can include a Camshaft Position

Sensor (CMP) that measures camshaft position. A CAN bus sensor device 103 can include a Tire Pressure Monitoring System (TPMS) sensor that measures tire pressure. A CAN bus sensor device 103 can measure steering angle sensors, knock sensors, fuel level sensors, rain sensors, light sensors, parking sensors, blind spot sensors, parking sensors, infrared sensors, Light Detection and Ranging sensors and others.

A vehicle 101 can include one CAN bus sensor device 103 that includes all of these measurements, or multiple CAN bus sensor devices 103 that work together to provide these measurements. The CAN bus sensor device 103 can communicate with the hydroplaning computation device 106 using a wired or wireless network connection to provide these parameters as inputs. The hydroplaning computation device 106 can include or access a sensor or set of sensors that are separate from the CAN bus sensor devices 103. This can include tire-mount or tire-borne sensors and other types of sensors.

The server environment 109 can include, for example, a hardware computing device or any other system providing computing capability. Alternatively, the server environment 109 can include one or more computing devices that are arranged, for example, in one or more server banks, computer banks, computing clusters, or other arrangements. The server environment 109 can include a grid computing resource or any other distributed computing arrangement. The computing devices can be located in a single installation or can be distributed among many different geographical locations.

Various applications can be executed on the server environment 109. For example, vehicle management service 120 can be executed by the server environment 109. Other applications, services, processes, systems, engines, or functionality not discussed in detail herein may also be executed or implemented by the server environment 109.

The server environment 109 can include or be operated as one or more virtualized computer instances. For purposes of convenience, the server environment 109 is referred to herein as singular. Even though the server environment 109 is referred to in the singular, it is understood that a plurality of server environments 109 can be employed in the various arrangements as described above. As the server environment 109 communicates with the hydroplaning computation device 106 and the CAN bus sensor devices 103 directly or indirectly, the server environment 109 can be described as a remote server environment 109 or a cloud server environment 109.

The server environment 109 can include a data store. The data store can include memory of the server environment 109, mass storage resources of the server environment 109, or any other storage resources on which data can be stored by the server environment 109. The data store can include memory of various hosts in some examples. In some examples, the data store can include one or more relational databases, object-oriented databases, hierarchical databases, hash tables or similar key-value data stores, as well as other data storage applications or data structures. The data stored in the data store, for example, can be associated with the operation of the various services or functional entities described below.

A client device 112 can include a processor-based system such as a computer system. Such a computer system can be embodied in the form of a personal computer (e.g., a desktop computer, a laptop computer, or similar device), a mobile computing device (e.g., personal digital assistants, cellular telephones, smartphones, web pads, tablet computer systems, music players, portable game consoles, electronic book readers, and similar devices), media playback devices (e.g., media streaming devices, BluRay® players, digital video disc (DVD) players, set-top boxes, and similar devices), a videogame console, or other devices with like capability. The client devices can include one or more displays, such as liquid crystal displays (LCDs), gas plasma-based flat panel displays, organic light emitting diode (OLED) displays, electrophoretic ink ("E-ink") displays, projectors, or other types of display devices.

The hydroplaning computation device 106 can have access to vehicle parameters for the vehicle 101 to which it is connected, as well as CAN bus sensor data received from the CAN bus sensor devices 103, for example, using the CAN. The hydroplaning computation device 106 can use this information to calculate a remaining contact area value for the vehicle 101. The remaining contact area value can be mapped to a particular one of a number of hydroplaning detection statuses or flags. The hydroplaning detection statuses can include hydroplaning, not hydroplaning, partial hydroplaning, and others. The hydroplaning detection statuses can be applied to the vehicle 101 generally to indicate that the vehicle 101 is hydroplaning, not hydroplaning, or is partially hydroplaning. The hydroplaning detection statuses can additionally or alternatively be applied to each wheel or tire position such as Front Left, Front Right, Rear Left, Rear Right. The hydroplaning detection statuses can additionally or alternatively be applied to a set of tire positions corresponding to a "side" of the vehicle such as left side (e.g., Front Left, Rear Left), right side (e.g., Front Right, Rear Right), front side (e.g., Front Left, Front Right), and rear side (e.g., Rear Left, Read Right).

The hydroplaning probability calculation performed by hydroplaning computation device 106 can refer to a CAN-based detection model that does not require additional sensors. The model can be "tire agnostic" in that once the model is adapted to the vehicle parameters for a particular vehicle 101, no additional parameters are required that take into consideration different tire models or wear levels. However, this model can be integrated with hydroplaning detection models based on other sensors other than CAN bus sensor devices 103.

The vehicle parameters can be stored in a data store that is accessible to the hydroplaning computation device 106. Vehicle parameters can include but are not limited to vehicle mass, vehicle inertia moment along a Z axis, vehicle front track, vehicle rear track, center of gravity height, wheel inertia along a Y axis, vehicle front section area, and aerodynamic coefficient along an X axis (e.g., associated with the aerodynamic properties of the vehicle 101 traveling along the X axis).

In the context of a vehicle 101, the Z axis can represent the vertical axis, which runs vertically through the vehicle 101, with the top of the vehicle 101 being the positive direction and the bottom being the negative direction. The X axis can represent a longitudinal horizontal axis that runs from front to rear, with the front of the vehicle 101 being the positive direction and the rear being the negative direction. The Y axis can be a lateral horizontal axis that runs from side to side, with the left side being the positive direction and the right side being the negative direction.

The vehicle management service 120 can provide a user interface that manages and tracks various information about vehicles 101. The vehicles and trailers can be associated with particular enterprises such as trucking companies and services, individual contractors or employees that operate and use the vehicles 101, and so on. A vehicle 10 can be registered in association with a particular enterprise. Administrators of the enterprise, as well as administrators of the vehicle management service 120 can log in and view user interfaces through which vehicles 101, and their associated components.

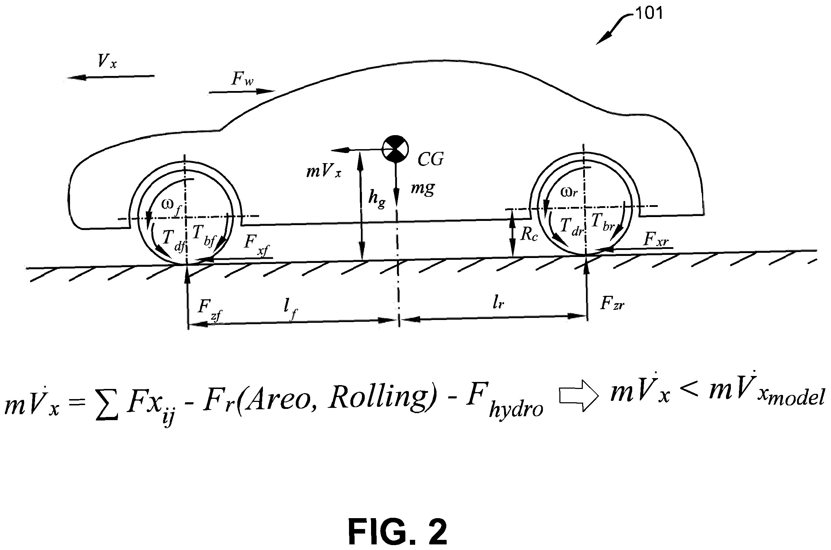

FIG. 2 shows operational principles of vehicle hydroplaning in terms of parameters monitored by the hydroplaning detection system 100. In this figure, a vehicle 101 is moving from right to left along an X axis with a velocity $V_x$. A force of wind $F_w$ can resist this motion, resulting in Aerodynamic resistance "AeroRes." The term $\omega_f$ can refer to angular velocity of the front wheel(s).

Starting with the front side of the vehicle 101, the term $T_{df}$ can refer to drive torque of the front wheel(s) of the vehicle 101. The term $T_{bf}$ can refer to braking torque of the front wheel(s) of the vehicle 101. The term $F_{xf}$ can refer to the force applied along the X axis with respect to the front wheels. The term $F_{zf}$ can refer to the force applied along the Z axis with respect to the front wheels, at a distance a from the center of gravity CG along the X axis of the vehicle 101.

As seen at the center of the vehicle 101, the term $m\dot{V}_x$ can refer to mass m multiplied by the time derivative of longitudinal velocity $\dot{V}_x$ of the vehicle 101. The term $H_g$ can refer to the height of the center of gravity CG of the vehicle 101.

The term mg can refer to mass of the vehicle 101 multiplied by gravity.

Towards the rear of the vehicle 101, the term $T_{dr}$ can refer to drive torque of the rear wheel(s) of the vehicle 101. The term $T_{br}$ can refer to braking torque of the rear wheel(s) of the vehicle 101. The term $F_{xr}$ can refer to the force applied along the X axis with respect to the rear wheels. The term $R_e$ can refer the radius of the wheels of the vehicle 101. The term $F_{zr}$ can refer to the force applied along the Z axis with respect to the rear wheels, at a distance b from the center of gravity CG along the X axis of the vehicle 101.

A force $F_{xij}$ can refer to the force applied by the drive train of the vehicle in the X direction or direction of travel. This can include a sum of all "drive" tire positions front left, front right, rear left rear right. In this example, $F_{xij}$ can include $F_{xf}$ and $F_{xr}$. Water resistance or drag force can be referred to as "$F_{hydro}$." The term $m\dot{V}_x$ can refer to the acceleration along the X axis that is measured by the CAN bus sensor devices 103. The term $m\dot{V}_{xmodel}$ can refer to the acceleration along the X axis calculated using a power train model for the vehicle 101 using the terms or parameters shown, among others.

If water drag force is present, then $m\dot{V}_x = \Sigma F_{xij} - Fr(Aero,Rolling) - F_{hydro}$. As a result, $m\dot{V}_x < m\dot{V}_{xmodel}$ if water drag force is being experienced. A power train model used by the hydroplaning computation device 106 can calculate the values in this equation other than water drag force "$F_{hydro}$." Water drag force will reduce the actual measured acceleration $m\dot{V}_x$, while the acceleration calculated using the hydroplaning computation device 106 based at least in part on the power train model is not considering water drag force. Accordingly, the hydroplaning computation device 106 can calculate water drag force or "$F_{hydro}$" as $m\dot{V}_x - m\dot{V}_{xmodel}$ if the measure acceleration from the CAN bus sensor devices 103 is provided.

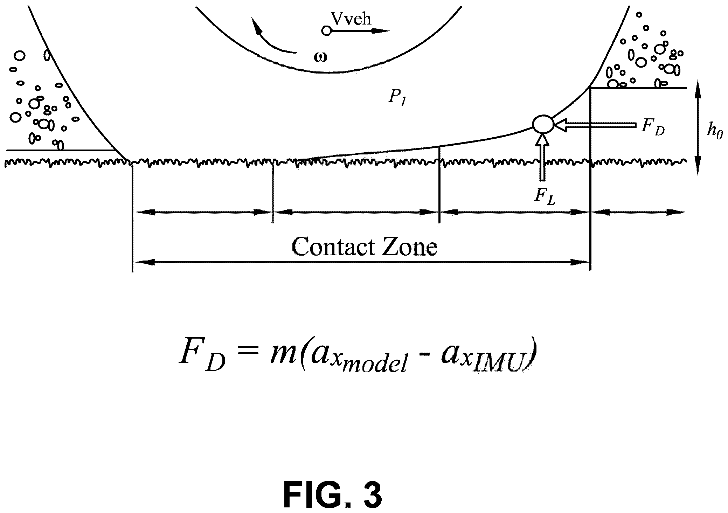

FIG. 3 shows tire-level operational principles of vehicle hydroplaning in terms of parameters utilized by the hydroplaning detection system 100 and the hydroplaning computation device 106. In this figure, the tire, wheel, and axle of the vehicle 101 are moving from left to right. The movement of the vehicle 101 from left to right is a positive X direction as compared to the right to left movement being positive in FIG. 2. In other words, the positive direction along the X axis can refer to a direction or travel of the vehicle 101 as can be understood.

The term $V_{veh}$ can refer to velocity of the vehicle 101. The term $\omega$ can refer to angular velocity of the tire (or wheel or axle) being considered in this example. The tire is encountering water with an initial height of $h_o$, where this initial height can refer to height of the water when unaffected by the tire of the vehicle 101. The water can result in or apply a drag force $F_D$ and a lift force $F_L$ at a position P1 on the tire. In this case, the drag force $F_D$ of a front axle (or wheel or tire), $F_{DFaxle}$ can be calculated mass (or predetermined mass) of the vehicle 101, m, multiplied by ($a_{xmodel} - a_{xIMU}$). The hydroplaning computation device 106 can calculate the lift force $F_L$ of the front axle using the $F_{DFaxle}$ parameter can be used to identify the lift force $F_L$ that is applied to the tire. In combination with the vehicle mass or weight and the other parameters described in the previous figures, and a model of hydroplaning behavior that includes the lifted portion, the intermediate or partial lift portion, and the full contact portion of the tire, the hydroplaning computation device 106 can use the lift force $F_L$ to identify a "remaining contact" value for each tire and/or an overall remaining contact value. In some examples, the overall remaining contact value can be calculated without calculating individual tire or wheel values. Additionally or alternatively, the overall remaining contact value can be calculated as a combined remaining contact value such as a maximum, minimum, average, sum, weighted average with greater weight for a particular set of tires such as front tires, rear tires, drive tires, or another combined value. The remaining contact values can be expressed as a percentage of contact, area of contact, or other type of measure indicating an amount of contact.

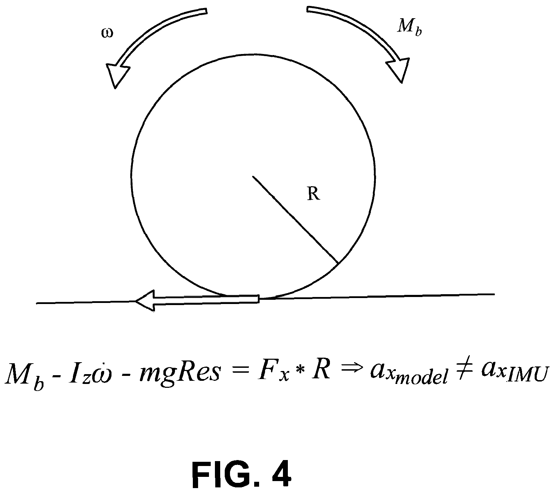

FIG. 4 shows tire-level operational principles of vehicle hydroplaning in terms of parameters utilized by the hydroplaning detection system 100 and the hydroplaning computation device 106. In this figure the tire, wheel, and axle of the vehicle 101 are moving from right to left, so right to left indicates a positive direction along the X axis. The term $\omega$ can refer to angular velocity, R can refer to radius, $M_b$ can refer to total moment or total torque, and Fx can refer to force applied by the ground in a positive direction along the X axis. Total torque $M_b$ can be the power train torque minus braking torque. The terms $I_z\dot{\omega}$ can refer to inertia (e.g., in the z direction) multiplied by the time derivative of angular velocity $\omega$. The terms $mgR_{res}$ can refer to vehicle mass m, gravity, and rotational resistance $R_{res}$. Since $M_b - I_z\omega - mgR_{res} = F_x * R$, it follows that the power train model generated acceleration along the X axis, $a_{xmodel}$, is not equal to $a_{xIMU}$, referring to the acceleration measured using an Inertial Measurement Units (IMU) sensors or other sensor of the CAN bus sensor devices 103.

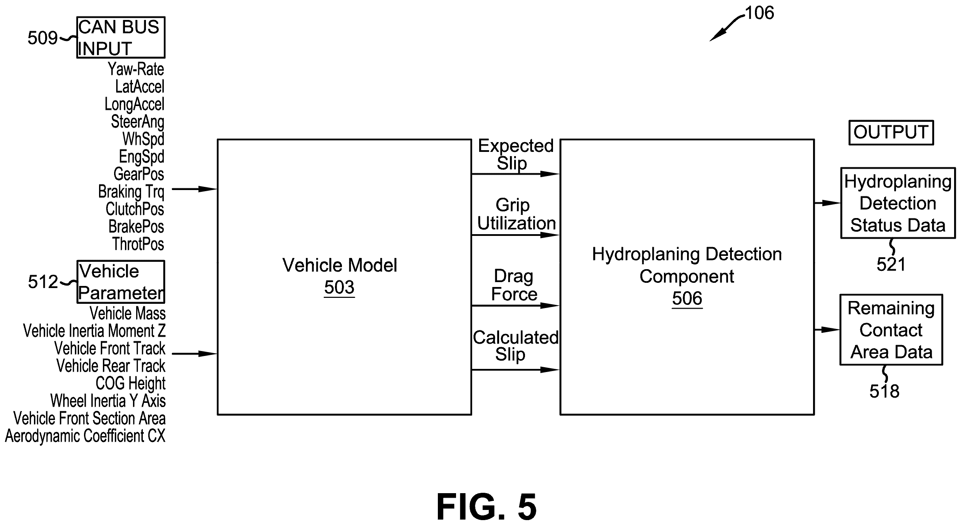

FIG. 5 illustrates an example of a hydroplaning computation device 106 of a hydroplaning detection system 100. The hydroplaning computation device 106 can include a vehicle model 503 and hydroplaning detection logic 506, and other instructions. The hydroplaning computation device 106 can also include a CAN bus input component 509 and a vehicle parameter data component 512. The hydroplaning computation device 106 can output and store remaining contact area 518 and detection flags 515. This data can be output and provided to other components such as vehicle control components and to provide visual, audible, and other warnings. The data output can also be stored in a data store accessible to the hydroplaning computation device 106 locally to the vehicle 101 as well as transmitted for storage in data stores of the vehicle management service 120.

The CAN bus input component 509 can interface or connect with the CAN bus and communicate with the CAN bus sensor device(s) 103 to access a number of variable or dynamic parameters of the vehicle 101 that regularly change as a result of normal vehicular navigation inputs and road conditions. The CAN bus input component 509 can receive, retrieve, or otherwise identify current values for dynamic vehicle parameters including yaw rate, lateral acceleration, longitudinal acceleration, steering angle, wheel speed, vehicle speed, engine speed, gear position, braking torque, clutch position, brake position, throttle position, and/or other parameters. In examples such as electric vehicles and some hybrid vehicles, wheel torque, regenerative torque, and other electric vehicle parameters can also be identified. The hydroplaning computation device 106 can use this data as input for the vehicle model 503.

The vehicle parameter data component 512 can interface or connect with a data store that includes a number of static vehicle parameters of the vehicle 101 that remain the same during normal vehicular navigation inputs and road conditions. The values for the static parameters can be different for different makes and different models of vehicles 101, where a make and/or model of the vehicle 101. However, the same make and model can have the same values for the static parameters. While these parameters are static or agnostic to normal vehicular navigation inputs and road conditions, they may change depending on vehicle configuration changes that modify a physical component of the vehicle 101, such as a change in ride height, aerodynamic component position, and so on. The hydroplaning computation device 106 can identify a vehicle configuration, for example, using configuration data indicated in the CAN, and map the configuration data to a set of static parameters to use while the vehicle is in that configuration. The static vehicle parameters can include vehicle mass, vehicle inertia moment along a Z axis, vehicle front track, vehicle rear track, center of gravity height, wheel inertia along a Y axis, vehicle front section area, and aerodynamic coefficient as the vehicle 101 moves along an X axis.

The vehicle model 503 can include a power train model for the vehicle 101 and other physical models of the vehicle 101 and its components, among other information. For example, the vehicle model 503 can include a tire force calculation, a physical tire model, a friction calculation model, a powertrain-based tire or wheel equilibrium model, a two dimensional vehicle equilibrium model, a slip ratio calculation model, and/or other models. These equations and calculations can define vehicle geometry in association with the static and dynamic vehicle parameter values. Generally, the vehicle model 503 can take the static and dynamic vehicle parameter values as input to generate and output values for a set of intermediate parameters including tire-model-based "expected" slip, grip utilization, drag force, and wheel-speed-based "calculated" slip. The vehicle model 503 or other executable components of the hydroplaning computation device 106 can provide the values for the intermediate parameters to the hydroplaning detection component 506.

The hydroplaning detection component 506 can take inputs including values for the intermediate parameters to generate remaining contact area data 518 for the vehicle 101. The hydroplaning computation device 106 can access temporarily or durably stored values for the intermediate parameters, or a component of the hydroplaning computation device 106 can invoke the hydroplaning detection component 506 using these values. The hydroplaning detection component 506 can include logic that processes or maps the values for the intermediate parameters to one or more values for remaining contact area. In other words, the remaining contact area data 518 can include a remaining contact area for the overall vehicle 101, for individual wheel or tire positions, and for any subset of the wheel or tire positions as indicated earlier.

The hydroplaning detection component 506 can use the remaining contact area data 518 to generate hydroplaning detection status data 521 such as flags, tags, signals, and other indicators of data. The hydroplaning detection status data 521 can indicate whether the vehicle 101 (or wheel position) is hydroplaning, not hydroplaning, or partially hydroplaning. The hydroplaning detection status data 521 can include a vehicle level hydroplaning detection status. The hydroplaning detection status data 521 can additionally or alternatively include a status indicator applied to each wheel or tire position such as Front Left, Front Right, Rear Left, Rear Right. The hydroplaning detection status indicators can additionally or alternatively be applied to a set of tire positions corresponding to a "side" of the vehicle such as left side (e.g., Front Left, Rear Left), right side (e.g., Front Right, Rear Right), front side (e.g., Front Left, Front Right), and rear side (e.g., Rear Left, Read Right).

The hydroplaning detection component 506 can map the remaining contact area data 518 to hydroplaning detection status data 521 based on a predetermined set of threshold hydroplaning values. The threshold values can include a threshold remaining contact area value (or range) and a relationship type for "not hydroplaning," a threshold remaining contact area value (or range) and a relationship definition for "partially hydroplaning," and a threshold remaining contact area value (or range) and a relationship type for "hydroplaning." The relationship definition can indicate one or more comparison operators that indicate how to utilize the threshold value or values indicating a range that indicates whether the vehicle 101 is in a non-hydroplaning status, partially hydroplaning status, or hydroplaning status. The operators can include less than, less than or equal to, greater than, greater than or equal to, and equal to.

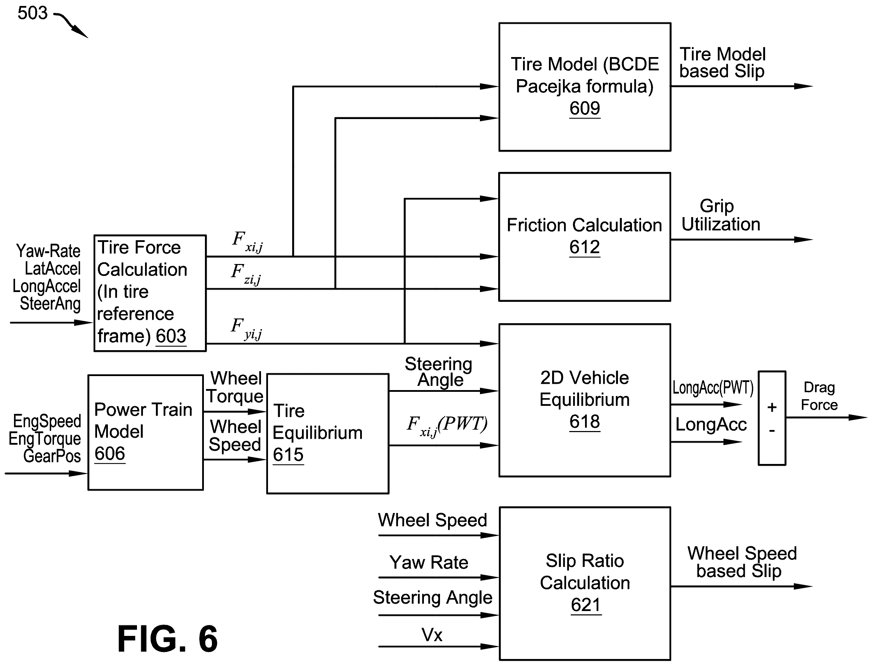

FIG. 6 illustrates an example of the operation of a vehicle model 503 component of a hydroplaning detection device 106. In this example, the vehicle model 503 can include a tire force calculation component 603, a power train model 606, a tire model 609, a friction calculation model 612, a tire equilibrium model 615, a two dimensional vehicle equilibrium model 618, and a slip ratio calculation model 621. These components can use the static parameter values as static configuration weights and values, and can use dynamic vehicle parameter values as variable inputs to generate specific intermediate output values including tire-model-based slip, grip utilization, drag force, and wheel-speed-based slip. While not shown, the input parameters for the vehicle model 503 can also include static parameters that are specific to a vehicle and its configuration as discussed with respect to the previous figures.

The tire force calculation component 603 can take inputs including yaw rate of the vehicle 101, lateral (Y axis) acceleration measurements with respect to the vehicle 101, longitudinal (X axis) acceleration measurements with respect to the vehicle 101, steering angle of the vehicle. In some examples, vertical (Z axis) acceleration measurements with respect to the vehicle 101 can also be provided as inputs. The tire force calculation component 603 can use these inputs to generate outputs including total force along the X axis, total force along the Z axis, and total force along the Y axis. In some examples, the outputs can include a pertire indication of total force along the tire's X axis, total force along the tire's Z axis, and total force along the tire's Y axis. The tire force calculation component 603 can include an empirical model based on experimental data or a physics based model.

To this end, the tire force calculation component 603 can include a tire force calculation from a tire reference frame. A tire reference frame can include a coordinate system defined relative to a tire, with the origin of the coordinate system located at the tire contact patch with the road surface. In some examples, another location can be selected for the origin. The orientation of the reference frame can be aligned with the tire's local axes rather than the overall axes of the vehicle 101. As can be understood, as a tire or wheel is steered in a particular direction, the centerline of the vehicle 101 defining the overall X axis of the vehicle 101 is no longer aligned in the same direction as the centerline of the tire defining the local X axis of the tire or wheel.

One example of the tire force calculation component 603 utilizes the following equation set:

If ax < 0

$$F_{x(FL)} = m * a_x * \frac{F_{z(FL)}}{F_{z_{tot}}}$$

$$F_{x(FR)} = m * a_x * \frac{F_{z(FR)}}{F_{z_{tot}}}$$

$$F_{x(RL)} = m * a_x * \frac{F_{z(RL)}}{F_{z_{tot}}}$$

$$F_{x(RR)} = m * a_x * \frac{F_{z(RR)}}{F_{z_{tot}}}$$

If ax > 0 (AWD car)

$$F_{x(FL)} = \frac{1}{2} m * a_x$$

$$F_{x(FR)} = \frac{1}{2} m * a_x$$

$$F_{x(RL)} = 0$$

$$F_{x(RR)} = 0$$

$$F_{y_{FL}} = \frac{\left(FrontWheelBase * a_y * VehicleMass + I_z \ddot{r}\right)}{WheelBase} * \frac{F_{z(FL)}}{F_{z_{tot}}}$$

$$F_{y_{FR}} = \frac{\left(FrontWheelBase * a_y * VehicleMass + I_z \ddot{r}\right)}{WheelBase} * \frac{F_{z(FR)}}{F_{z_{tot}}}$$

$$F_{y_{RL}} = \frac{\left(RearWheelBase * a_y * VehicleMass + I_z \ddot{r}\right)}{WheelBase} * \frac{F_{z(RL)}}{F_{z_{tot}}}$$

$$F_{y_{RR}} = \frac{\left(RearWheelBase * a_y * VehicleMass + I_z \ddot{r}\right)}{WheelBase} * \frac{F_{z(RR)}}{F_{z_{tot}}}$$

$$StaticLoadFront = \frac{1}{2} * VehicleMass * g * \frac{FrontwheelBase}{WheelBase}$$

$$StaticLoadRear = \frac{1}{2} * VehicleMass * g * \frac{RearwheelBase}{WheelBase}$$

$$Longitudinal\ load\ transfer = \frac{1}{2} m_{sprung} * h_{CG} * \frac{a_x}{Wheelbase}$$

$$Lateral\ load\ transfer = (m_{sprung} * h_{r_f} + \mu h_a) * ay/tr$$

$$Fz_{FL} = StaticLoadFront - LongitudinalLoadTransfer + LateralLoadTransfer$$

$$Fz_{FR} = StaticLoadFront - LongitudinalLoadTransfe - LateralLoadTransfer$$

$$Fz_{RL} = StaticLoadRear + LongitudinalLoadTransfer + LateralLoadTransfer$$

$$Fz_{RR} = StaticLoadRear + LongitudinalLoadTransfer - LateralLoadTransfer$$

In the foregoing equations, F indicates force, subscripts X, Y, and Z indicate the X, Y, and Z axes respectively. Subscript "FL" indicates front left, "FR" indicates front right, "RL" indicates rear left, and "RR" indicates rear right. Subscript "tot" indicates total. The terms m and "VehicleMass" refer to mass of the vehicle 101. The term $a_x$ refers to acceleration of vehicle center of gravity along an X axis. The term $a_y$ refers to acceleration of vehicle center of gravity along an Y axis. The term $I_z \gamma^{..}$ refers to inertia multiplied by angular acceleration or the second time derivative of angle of the indicated wheel or tire. The term g refers to acceleration of gravity. The term $h_{CG}$ can refer to the height of the center of gravity of the vehicle 101. The term $m_{sprung}$ refers to sprung weight of the vehicle 101.

The power train model 606 can take inputs including engine speed, engine torque, and gear position and can output wheel torque and wheel speed. The power train model 606 can include expressions that represent the dynamic behavior of powertrain of a particular vehicle 101. The powertrain can include the engine, transmission, drivetrain, and other related components of the vehicle 101. The power train model 606 can include a single model that handles the operation of the engine, transmission, drivetrain, and other related components, or the power train model 606 can include an engine model, transmission model, drivetrain model, and so on. The power train model 606 can analyze the performance of the powertrain under various conditions based on the values provided for the input parameters. The power train model 606 can include an empirical model based on experimental data or a physics based model. For electric vehicles 101, the power train model 606 can be omitted, for example, if the torque applied to each wheel is known and received from vehicle electronics such as the CAN bus.

In the example of a front wheel drive vehicle, the power train model 606 can include the following equations for wheel torque to the front drive wheels. This can also be used for the front wheels of an all wheel drive or four wheel drive vehicle 101. The equations can be modified for rear wheels.

$$WheelTorque_{FL} = \frac{1}{2} * \left(EngineTorque - \frac{d(EngineSpeed)}{dt} * EngineIntertia\right) * ReductionRatio$$

$$WheelTorque_{FR} = \frac{1}{2} * \left( EngineTorque - \frac{d(EngineSpeed)}{dt} * EngineIntertia \right) * ReductionRatio$$

$$WheelTorque_{RL} = 0$$

$$WheelTorque_{RR} = 0$$

The tire model 609 can take inputs including the tire-force calculations for the X axis and Z axis in the frame of reference of the tire, and can output a tire-model-based slip value. Some examples can also include tire-force calculations for the Y axis. The tire model 609 can include the Pacejka formula or another empirical model based on experimental data. The Pacejka formula can include $F_x = F_z Dsin(C*arctan\{B*Slip-E[B*Slip-arctg(B*Slip)]\})$, which can be solved with respect to the slip ratio using a predetermined default value of grip (e.g., $\mu$=0.8 or another value) and a predetermined default value of longitudinal stiffness. Alternatively, a vehicle physics based tire model can be used.

The friction calculation model 612 can take inputs including the tire-force calculations for the X axis, Y axis, and Z axis in the frame of reference of the tire, and can output a grip utilization value. The friction calculation model 612 can include an empirical model based on experimental data or a vehicle physics based model. In one example, the friction calculation model 612 can utilize the following grip utilization equation, where the summation i,j refers to totaling the forces along the indicated Axis.

$$Grip\ Utilization = \sqrt{\sum_{i,j} \left( \frac{F_{x_{i,j}}}{F_{z_{i,j}}} \right)^2 + \left( \frac{F_{y_{i,j}}}{F_{z_{i,j}}} \right)^2}$$

The tire equilibrium model 615 can take inputs including wheel torque and wheel speed and can output a power-train-based tire force calculation for the X axis. In some examples this can also be in the frame of reference of an individual tire, but can alternatively be in the frame of reference of the vehicle 101 as a whole. The tire equilibrium model 615 can include an empirical model based on experimental data or a physics based model.

One example of the tire equilibrium model 615 can utilize the following equations for the X axis forces for the indicated wheels or tires:

$$F_{x_{FL}} = \frac{\left( WheelTorque_{FL} + BrakingTorque_{FL} + \frac{d(WheelSpeed_{FL})}{dt} * WheelIntertia + VehicleMass * RollingResistance * RollRad \right)}{RollRad}$$

$$F_{x_{FR}} = \frac{\left( WheelTorque_{FR} + BrakingTorque_{FR} + \frac{d(WheelSpeed_{FR})}{dt} * WheelIntertia + VehicleMass * RollingResistance * RollRad \right)}{RollRad}$$

$$F_{x_{RR}} = \frac{\left( WheelTorque_{RR} + BrakingTorque_{RL} + \frac{d(WheelSpeed_{RR})}{dt} * WheelIntertia + VehicleMass * RollingResistance * RollRad \right)}{RollRad}$$

$$F_{x_{RL}} = \frac{\left( WheelTorque_{RL} + BrakingTorque_{RR} + \frac{d(WheelSpeed_{RL})}{dt} * WheelIntertia + VehicleMass * RollingResistance * RollRad \right)}{RollRad}$$

The two dimensional vehicle equilibrium model 618 can take inputs including steering angle, the power-train-based tire force calculation along the X axis, power-train-based tire force calculation along the Y axis, velocity along the X axis, and can output a power-train-model-based longitudinal acceleration in the frame of reference of the vehicle 101 (and/or the tire). This can be differenced with the measured longitudinal acceleration in the frame of reference of the vehicle 101 to produce a value for a drag force parameter. The measured longitudinal acceleration in the frame of reference of the vehicle 101 can alternatively be converted to a frame of reference of the tire for comparison with the power-train-model-based longitudinal acceleration value(s). In examples where the differencing is considered part of the two dimensional vehicle equilibrium model 618, the two dimensional vehicle equilibrium model 618 can take inputs including the measured longitudinal acceleration in the frame of reference of the vehicle 101, steering angle, and the powertrain-based tire force calculation along the X axis, and can output a value for a drag force parameter. The two dimensional vehicle equilibrium model 618 can include an empirical model based on experimental data or a physics based model. One example of the two dimensional vehicle equilibrium model 618 can utilize the following equation to calculate a powertrain-based acceleration along the X axis.

$$a_{x_{PWT}} = \left( \sum_{i,j} (F_{x_{i,j}} \cos(\delta) + F_{y_{i,j}} \sin(\delta)) \right) - \frac{1}{2} \rho V^2 A_f C_x \right) / (VehicleMass)$$

The term $\rho$ refers to air density, the term $\delta$ refers to wheel steering angle, the term V refers to the vehicle speed, Af refers to the cross-sectional area of the car and the term $C_x$ refers to the drag coefficient.

The slip ratio calculation model 621 can take inputs including wheel speed, yaw rate, steering angle, and velocity along an X axis in the frame of reference of the vehicle 101 or a tire, and can output a value for wheel-speed-based slip. The slip ratio calculation model 621 can include an empirical model based on experimental data or a physics based model. One example of the slip ratio calculation model 621 can utilize the following equation.

$$Slip_{i,j} = \frac{(\omega_{i,j} - V_x)}{V_x}$$

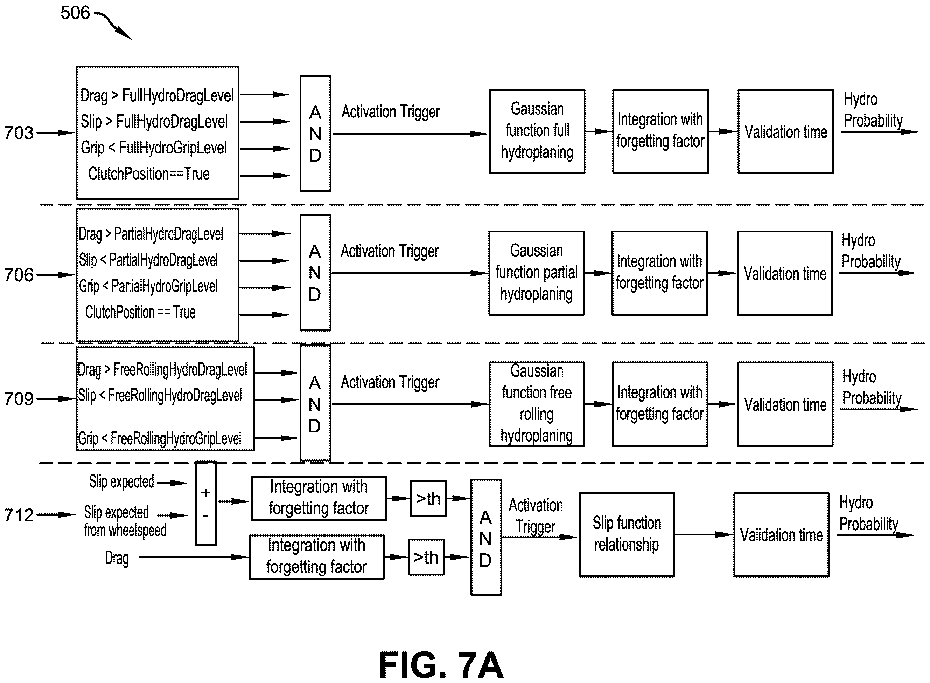

FIG. 7A illustrates an example of the operation of a hydroplaning detection component 506 of a hydroplaning detection device 106. The hydroplaning detection component 506 can calculate remaining contact area using four different hydroplaning probability calculations 703, 706, 709, and 712. The hydroplaning detection component 506 can identify the maximum value for remaining contact area calculated at a given time. The maximum value for remaining contact area can be comparted to predetermined contact area thresholds to identify whether the hydroplaning status data 521 is to indicate "no hydroplaning," "partial hydroplaning," or "full hydroplaning," among other options discussed such as single-side hydroplaning and so on.

The hydroplaning probability calculation 703 can be referred to as a 'full hydroplaning' hydroplaning probability calculation 703, since the slip value measured or calculated using wheel speed and other dynamic parameters is greater than a threshold slip value for full hydroplaning. The hydroplaning probability calculation 703 can be calculated periodically with multiple calculations per minute or per second in various examples, using current measured values for dynamic parameters as well as the longstanding values for static parameters. The hydroplaning probability calculation 703 can calculate values for a number of parameters, and then evaluate a set of preconditions that trigger the rest of the hydroplaning probability calculation 703.

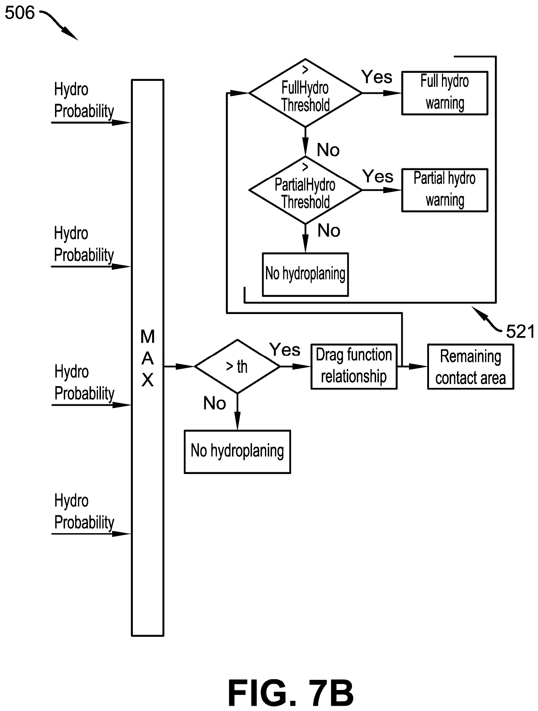

For example, if one or more of a drag value measured or calculated using dynamic parameters is greater than a threshold drag value for full hydroplaning, the slip value measured or calculated using wheel speed and other dynamic parameters is greater than a threshold slip value for full hydroplaning, the grip value measured or calculated using dynamic parameters is less than a threshold grip value for full hydroplaning, and the clutch position is true (indicating that the clutch is engaged or fully released, and the power train is delivering power from the engine to the wheels), or any combination thereof, then this set of factors acts as an activation trigger to perform a hydroplaning probability calculation 703 that is weighted and designed for full hydroplaning scenarios. In the example of electric vehicles, the clutch position can in some cases be omitted as a factor. This can include performing at least one full hydroplaning Gaussian function that is weighted, designed, or otherwise specific to full hydroplaning, followed by an integration with a forgetting factor for full hydroplaning, followed by a validation time. The forgetting factor can refer to a factor or weighting where older values in a history of values utilized affect the hydroplaning probability calculation 703 lesser than more recent values. The hydroplaning probability calculation 703 can use the Gaussian function to output a probability of hydroplaning value. In some examples, the hydroplaning probability calculation 703 can instead provide a remaining contact area value based on a drag function relationship, and the maximum remaining contact area value can be identified, for example, using the maximum value calculation shown in FIG. 7B, which continues from FIG. 7A. In this case, the hydroplaning probability calculation 703 can be referred to as a remaining contact area calculation. The drag function relationship can refer to a model that identifies remaining contact area based on the quantity of value of slip, the vehicle load or mass, the tire pressure, and the type of tire if known.

The hydroplaning probability calculation 706 can be referred to as a 'partial hydroplaning' hydroplaning probability calculation 706, since the slip value measured or calculated using wheel speed and other dynamic parameters is less than a threshold slip value for partial hydroplaning. The hydroplaning probability calculation 706 can be calculated periodically with multiple calculations per minute or per second in various examples, using current measured values for dynamic parameters as well as the longstanding values for static parameters. The hydroplaning probability calculation 706 can calculate values for a number of parameters, and then evaluate a set of preconditions that trigger the rest of the hydroplaning probability calculation 706.

For example, if one or more of a drag value measured or calculated using dynamic parameters is greater than a threshold drag value for partial hydroplaning, the slip value measured or calculated using wheel speed and other dynamic parameters is less than a threshold slip value for partial hydroplaning, the grip value measured or calculated using dynamic parameters is less than a threshold grip value for partial hydroplaning, and the clutch position is true (indicating that the clutch is engaged or fully released, and the power train is delivering power from the engine to the wheels), or any combination thereof, then this set of factors acts as an activation trigger to perform a hydroplaning probability calculation 706 that is weighted and designed for partial hydroplaning scenarios. In the example of electric vehicles, the clutch position can in some cases be omitted as a factor. This can include performing a partial hydroplaning Gaussian function that is weighted, designed, or otherwise specific to partial hydroplaning, followed by an integration with a forgetting factor for partial hydroplaning, followed by a validation time. The forgetting factor can refer to a factor or weighting where older values in a history of values utilized affect the hydroplaning probability calculation 706 lesser than more recent values. The hydroplaning probability calculation 706 can use the Gaussian function to output a probability of hydroplaning value. In some examples, the hydroplaning probability calculation 706 can instead provide a remaining contact area value based on a drag function relationship, and the maximum remaining contact area value can be identified, for example, using the maximum value calculation shown in FIG. 7B. In this case, the hydroplaning probability calculation 706 can be referred to as a remaining contact area calculation.

The hydroplaning probability calculation 709 can be referred to as a 'freewheeling' or 'rolling hydroplaning' hydroplaning probability calculation 709, since the clutch position can be false (indicating that the clutch is disengaged or fully depressed, and the power train is not delivering power from the engine to the wheels). In other words, the vehicle 101 is freewheeling and the hydroplaning type if hydroplaning is a rolling hydroplaning scenario. In the example of electric vehicles, the clutch position can in some cases be omitted as a factor. The hydroplaning probability calculation 709 can be calculated periodically with multiple calculations per minute or per second in various examples, using current measured values for dynamic parameters as well as the longstanding values for static parameters. The hydroplaning probability calculation 709 can calculate values for a number of parameters, and then evaluate a set of preconditions that trigger the rest of the hydroplaning probability calculation 709.

For example, if one or more of a drag value measured or calculated using dynamic parameters is greater than a threshold drag value for freewheeling, the slip value measured or calculated using wheel speed and other dynamic parameters is less than a threshold slip value for freewheeling, the grip value measured or calculated using dynamic parameters is less than a threshold grip value for freewheeling, and the clutch position is false, or any combination thereof, then this set of factors acts as an activation trigger to perform a hydroplaning probability calculation 709 that is weighted and designed for freewheeling or rolling hydroplaning scenarios. This can include performing a partial hydroplaning Gaussian function that is weighted, designed, or otherwise specific to freewheeling or rolling hydroplaning scenarios, followed by an integration with a forgetting factor for freewheeling or rolling hydroplaning scenarios, followed by a validation time. The forgetting factor can refer to a factor or weighting where older values in a history of values utilized affect the hydroplaning probability calculation 709 lesser than more recent values. The hydroplaning probability calculation 709 can use the Gaussian function to output a probability of hydroplaning. In some examples, the hydroplaning probability calculation 709 can instead provide a remaining contact area value based on a drag function relationship, and the maximum remaining contact area value can be identified, for example, using the maximum value calculation shown in FIG. 7B. In this case, the hydroplaning probability calculation 709 can be referred to as a remaining contact area calculation.

The hydroplaning probability calculation 712 can be referred to as a "dynamic" hydroplaning probability calculation 709, since the calculation can be performed if wheel speed calculated slip is more than a threshold value greater than expected slip value when integrated with a forgetting factor that causes older values in a history of values of slip 'expected' and 'wheel speed calculated' to be weighted a predetermined amount or factor less than more recent values. The hydroplaning probability calculation 712 can be calculated periodically with multiple calculations per minute or per second in various examples, using current measured values for dynamic parameters as well as the longstanding values for static parameters. If one or more of, the slip value measured or calculated using wheel speed and other dynamic parameters is greater than a slip expected value, and a drag is greater than a threshold drag value, or any combination thereof, then this set of factors acts as an activation trigger to perform a hydroplaning probability calculation 712 that is weighted and designed for dynamic scenarios. This can include performing a slip function relationship calculation followed by a validation time. The hydroplaning probability calculation 712 can then output a probability of hydroplaning. In some examples, the hydroplaning probability calculation 712 can instead provide a remaining contact area value based on a drag function relationship, and the maximum remaining contact area value can be identified, for example, using the maximum value calculation shown in FIG. 7B. In this case, the hydroplaning probability calculation 712 can be referred to as a remaining contact area calculation.

FIG. 7B continues from FIG. 7A, further describing the operation of the hydroplaning detection component 506. The hydroplaning detection component 506 can then compare the various hydroplaning probabilities from the various calculations to identify the maximum among the hydroplaning probabilities at the current time or within a threshold time of the current time. If the hydroplaning probability is greater than (or in some embodiments greater than or equal to) a predetermined threshold hydroplaning probability, then the hydroplaning detection component 506 can generate a remaining contact area that is calculated using a drag function relationship.

The hydroplaning detection component 506 can output and store the remaining contact area. The remaining contact area can be compared to a set of remaining contact area thresholds including a "full hydroplaning" threshold remaining contact area value and a "partial hydroplaning" threshold remaining contact area value. If the current maximum remaining contact area is greater than (or in some embodiments greater than or equal to) the "full hydroplaning" threshold remaining contact area value, the hydroplaning detection component 506 can generate, output, and store a full hydroplaning warning flag, value, or other indication. Otherwise, if the current maximum remaining contact area is greater than (or in some embodiments greater than or equal to) the "partial hydroplaning" threshold remaining contact area value, the hydroplaning detection component 506 can generate, output, and store a partial hydroplaning warning flag, value, or other indication. Otherwise, if the current maximum remaining contact area is less than (or in some embodiments less than or equal to) the "partial hydroplaning" threshold remaining contact area value, the hydroplaning detection component 506 can generate no output, or generate, output and store a "not hydroplaning" flag, value, or other indication.

The hydroplaning detection component 506 can trigger one or more of the hydroplaning probability calculations 703, 706, 709, 712 based on Boolean logic. For hydroplaning probability calculations 703, 706, 709, when the predetermined conditions are satisfied, at least one Gaussian function is activated, otherwise it gives zero as an output such that it will not affect the maximum value identified. Logic of the Gaussian function(s) can match the drag value and the slip value to determine a degree of probability of hydroplaning.

In some examples, the Gaussian functions for each hydroplaning probability calculation can include drag and refer to probability density functions as follows.

$$ProbabilityDensityFunctionDrag = e^{\frac{-(DragValue - DragExpected)^2}{DragVariance^2}}$$

$$ProbabilityDensityFunctionSlip = e^{\frac{-(SlipValue - SlipExpected)^2}{SlipVariance^2}}$$

The expected slip value is not a fixed value but itself is adapted based on the resistance value at the corresponding step. As a result, the expected slip depends on the resistance value, where a greater slip value is expected if the drag is higher and a lower slip value is expected if the drag is lower.

The functions can also be weighted and otherwise tailored to the specific type of hydroplaning probability calculation being performed. The resulting values can then be cumulated according to a predetermined model or mathematical function with an integration with a forgetting factor. The output of this can be seen as an estimate of the remaining contact area of a contact patch between the tire and the road, and/or a probability of hydroplaning.

The hydroplaning probability calculations 703, 706 are relatively similar in operation: each uses different parameters to determine the presence of full (e.g., <30% remaining contact area or other predetermined threshold) and partial (<80% remaining contact area or other predetermined threshold) hydroplaning. They use different parameters because partial hydroplaning is often present with no or very little slip. This means we have less redundancy and therefore need more validation time and different metrics to estimate it.

When the engine and wheel/tire are not joined, the model is not observable (neutral or clutch depressed). However, the hydroplaning probability calculations 709 can still identify the phenomena when we are in neutral: this is because the expected acceleration is zero, so we can subtract this expected value (zero) with the acceleration value coming from the IMU and CAN and thus obtain the drag. So, the hydroplaning probability calculations 709 can overcome previous limitations and have the opportunity to estimate hydroplaning even in these conditions.

The hydroplaning probability calculation 712 high dynamic situations: in full throttle situations, this calculation can identify hydroplaning as the increase of slip and drag with speed: the more the speed increases, the slip and drag should also be greater. The hydroplaning probability calculation 712 can accumulate this signal over time. To provide an estimate of the contact area once the logic is triggered, it can use the definition of hydroplaning used in tire tests or another threshold level (e.g., 15% slip means full hydroplaning). hydroplaning probability calculation 712 can scale this value based on difference from the predefined threshold value. In many examples, high level of drag is correlated with high level of slip. As a result, matching both the value and the relationship between drag and slip can give a more robust way to identify hydroplaning scenarios, as performed using the hydroplaning detection component 506.

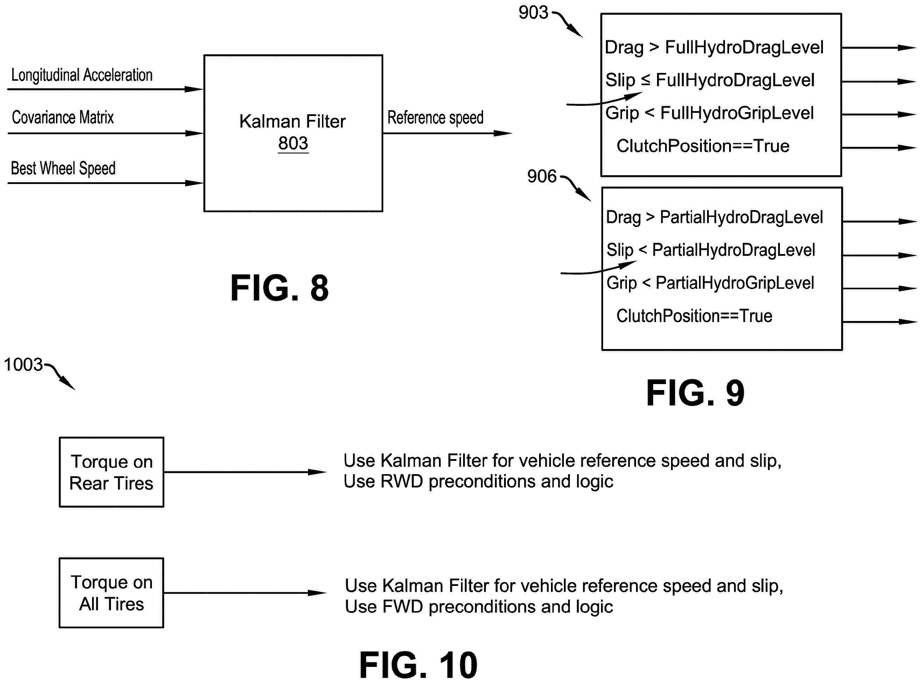

FIG. 8 illustrates a Kalman filter component 803 of a hydroplaning computation device 106. The Kalman filter component 803 can be a subcomponent of the vehicle model 503, the hydroplaning detection component 506, or another component. The Kalman filter component 803 can also be considered a separate component of the hydroplaning computation device 106.

The Kalman filter component 803 can be used to adapt the system to rear wheel drive and all wheel drive vehicles 101. The discussion of FIGS. 1-7, unless otherwise stated, can generally apply to front wheel drive vehicles 101. For rear wheel drive (and all wheel drive when the front wheels are not providing power), the slip value on the front tires during partial and full hydroplaning scenarios is negative. The Kalman filter component 803 can be used for to calculate this reference speed. The reference speed can be used to calculate the slip value, utilized as seen in FIG. 9.

The Kalman filter component 803 can take inputs including longitudinal acceleration, a covariance matrix, and best wheel speed. The Kalman filter component 803 can perform many iterations of calculations that utilize previous values of the process over time. In each iteration, previous data is provided as input and a prediction step and an update step are performed. At each step (or each iteration), the Kalman filter component 803 can select the best wheel as the wheel where the lowest slip value is calculated by the overall system. Based on the slip of this wheel, the Kalman filter component 803 can adjust the covariance matrix to provide more trust or weight to the longitudinal acceleration. The longitudinal acceleration and the wheel speed values can be received from the vehicle 101 sensors, or from another component of the hydroplaning computation device 106.

FIG. 9 shows an example of a set of preconditions 903 that trigger the rest of the hydroplaning probability calculation 703 (FIG. 7) for rear wheel drive vehicles 101 (and all wheel drive vehicles, as discussed in FIG. 10 below). FIG. 9 also shows an example of a set of preconditions 906 that trigger the rest of the hydroplaning probability calculation 706 (FIG. 7) for a rear wheel drive vehicle 101. Compared with the set of preconditions for front wheel drive vehicles shown in the hydroplaning probability calculation 703 of FIG. 7, the set of preconditions 903 shows that slip calculated using the reference speed provided using the Kalman filter component 803 is less than or equal to a full hydroplaning drag threshold that is specific to a particular rear wheel drive vehicle 101. The set of preconditions 906 shows that slip calculated using the reference speed provided using the Kalman filter component 803 is less than a partial hydroplaning drag threshold that is specific to the rear wheel drive vehicle 101.

FIG. 10 shows an all-wheel drive calculation selection component 1003 for all wheel drive vehicles 101. The all-wheel drive calculation selection component 1003 can identify whether torque is provided to rear ties or all tires, and select how to perform a hydroplaning probability calculation as a result of the vehicle situation. The all-wheel drive calculation selection component 1003 can use data from the CAN to identify the torque distribution. In some examples, the all-wheel drive calculation selection component 1003 can identify whether the torque provided to the front tires is below a threshold, indicating that torque is substantially on or limited to the rear tires. The vehicle reference speed can then be calculated using a Kalman filter component 803, slip can be calculated using this reference speed, and the rear wheel drive set of preconditions 903 and the rear wheel drive set of preconditions 906 can be utilized. If the torque provided to the front tires (and the rear tires) is above a threshold, then the all-wheel drive calculation selection component 1003 can determine that the torque is on all tires. The vehicle reference speed can then be calculated using a Kalman filter component 803, slip can be calculated using this reference speed, and the front wheel drive sets of preconditions shown in FIG. 7 can be utilized.

In some examples, the all-wheel drive calculation selection component 1003 can also identify whether the torque provided to the rear tires is below a threshold, indicating that torque is substantially on or limited to the front tires. In this scenario, the vehicle is operating as a front wheel drive vehicle and the sets of preconditions shown in FIG. 7 can be utilized.

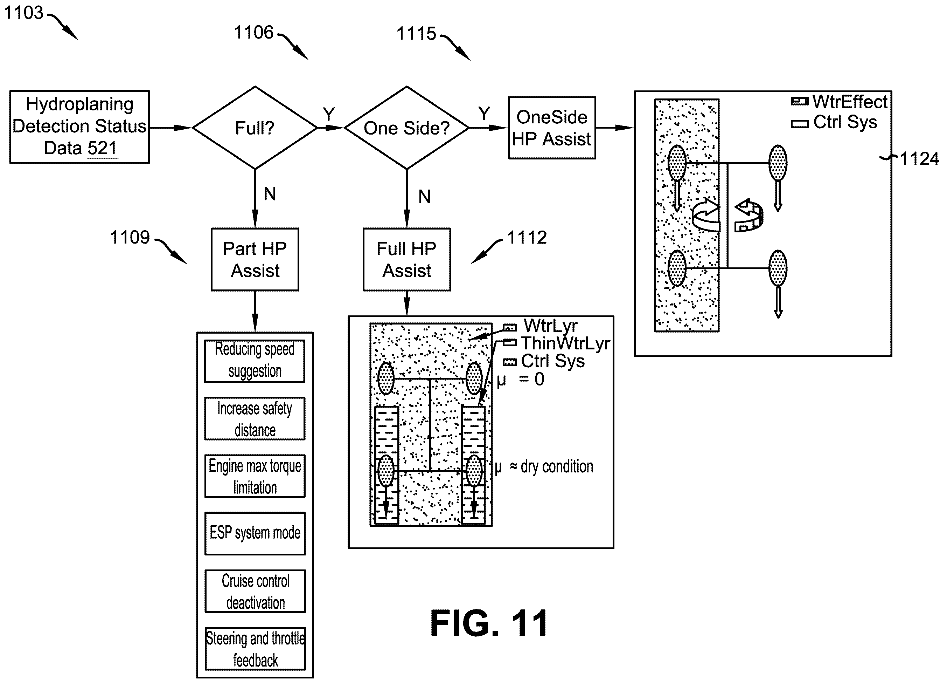

FIG. 11 shows a hydroplaning detection control system 1103. The hydroplaning detection control system 1103 can use the hydroplaning detection status data 521 to generate hydroplaning assistance outputs for a vehicle 101. The hydroplaning assistance outputs can include vehicle control aides and user interface outputs. The hydroplaning detection control system 1103 can perform one or more decision steps 1106 using the hydroplaning detection status data 521 to identify whether full, partial, or one-sided hydroplaning assistance outputs are to be provided.

In an instance in which partial hydroplaning assistance 1109 is to be provided, the hydroplaning detection control system 1103 can generate instructions for the vehicle 101 to automatedly (e.g., without user input) implement for partial hydroplaning. This can include reducing speed, increasing a safety distance from other vehicles, limiting engine max torque, deactivating cruise control, providing steering and throttle feedback, or any combination thereof. The hydroplaning detection control system 1103 can additionally or alternatively generate instructions for the vehicle 101 to display or activate a user interface elements that indicate partial hydroplaning, suggest reduction of speed, suggests an increase in safety distance, indicate an Electronic Stability Program (ESP) warning, indicate that engine max torque is limited, indicates that cruise control is deactivated, indicate that steering and throttle feedback are being applied, or any combination thereof.

In an instance in which full hydroplaning assistance 1112 is to be provided, the hydroplaning detection control system 1103 can generate instructions for the vehicle 101 to automatedly implement for full hydroplaning. In full hydroplaning conditions, even if the friction on the front axle is close to zero, it is also true that the water displaced by the front tires can cause the rear tires to face a thinner layer of water than the front tires. This is indicated by the rear tires (bottom position as shown) to have a dry condition or quasi dry condition where quasi dry condition is identified below a threshold slip level, above a threshold grip level, above a threshold contact area, or using another threshold vehicle condition or set of conditions. As a result, the hydroplaning detection control system 1103 can apply braking as indicated by the arrows relative to the rear tires. Therefore, once the full hydroplaning condition warning has been received, the proposed control system brakes only on the rear tires, completely (or partially) cutting the engine torque. The hydroplaning detection control system 1103 can monitor the yaw rate to apply braking symmetrically or asymmetrically to each rear tire in order to reduce instability (increase stability) of the vehicle 101. The hydroplaning detection control system 1103 can monitor the drag and slip value level on the front axle, and when they are brought into a predetermined relationship with predetermined threshold values, the hydroplaning detection control system 1103 can apply partial hydroplaning assistance 1109.

In an instance in which one side hydroplaning assistance 1115 is to be provided, the hydroplaning detection control system 1103 can generate instructions for the vehicle 101 to automatically implement for one side hydroplaning. The one side hydroplaning assistance 1115 can counter the torque resulting from the presence of water in the shaded area on the left side tires as shown in this example, which the system can identify as two tires on the same side with full hydroplaning threshold level remaining contact area. The one side hydroplaning assistance 1115 can apply brakes on the wheels on the side of vehicle 101 where both tires have a remaining contact area indicating partial or no hydroplaning, or another threshold level. The one side hydroplaning assistance 1115 can apply brakes in a manner that is controlled based on the overall vehicle yaw rate value, as well as the drag and slip values for these tires (and all tires). The hydroplaning detection control system 1103 can monitor the drag and slip values, and when they are brought into a predetermined relationship with predetermined threshold values, the hydroplaning detection control system 1103 can apply partial hydroplaning assistance 1109.

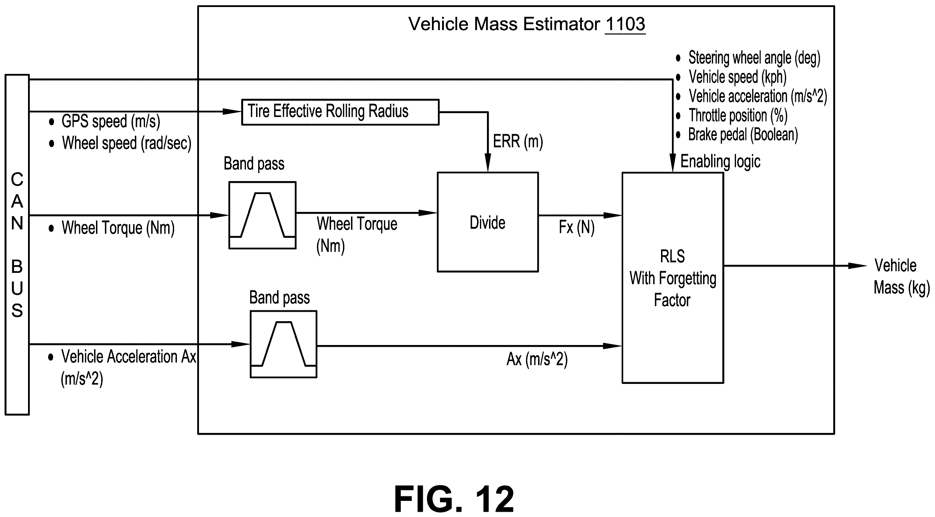

FIG. 12 illustrates an example of a vehicle mass estimator 1203 of a hydroplaning detection system 100. The vehicle mass estimator 1203 can take inputs, for example, from a CAN bus or another device of the vehicle 101. The inputs can include GPS speed, wheel speed, wheel torque, and vehicle acceleration. The vehicle mass estimator 1203 can use the GPS speed and the wheel speed to generate a tire effective rolling radius. The vehicle mass estimator 1203 can then use the effective rolling radius and wheel torque to generate a longitudinal force in the X direction, $F_x$. In some examples, the vehicle mass estimator 1203 can pass the wheel torque through a band pass filter, for example, to remove outliers prior to calculating $F_x$.

The vehicle mass estimator 1203 can use the longitudinal force in the X direction and the longitudinal vehicle acceleration in the X direction in a Recursive Least Squares (RLS) algorithm to generate an estimated vehicle mass value. In some examples, vehicle mass estimator 1203 can pass the vehicle acceleration through a band pass filter, for example, to remove outliers, remove higher frequency values. This enables the remaining algorithms of the vehicle mass estimator 1203 converge faster and more accurately. The vehicle mass estimator 1203 can take steering wheel angle, vehicle speed, vehicle acceleration, throttle position, and brake pedal position as inputs for enabling logic for the Recursive Least Squares (RLS) algorithm that generates the estimated vehicle mass value. The trigger condition or enabling logic can be used so that the calculation is based on a subset of values where the vehicle is accelerating.

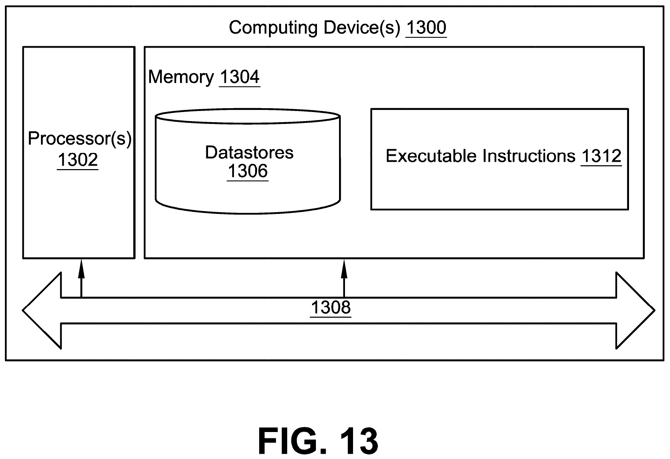

FIG. 13 illustrates an example computing device 1300 used for any of the computational devices of the hydroplaning detection system 100. This can include computing devices 1300 corresponding to a vehicle 101, a hydroplaning computation device 106, the server environment 109, and user devices that access the vehicle management service 120. The computing device 1300 includes at least one processing system, for example, having a processor 1302 and a memory 1304, both of which are electrically and communicatively coupled to a local interface 1308. The local interface 1308 can be embodied as a data bus with an accompanying address/control bus or other addressing, control, and/or command lines, for data communications and addressing between the processor 1302, the memory 1304, and the executable instructions 1312. Executable instructions 1312 of a computing device 1300 can include computing devices of the vehicle 101, computing devices of a hydroplaning computation device 106, computing devices of the server environment 109, user devices that access the vehicle management service 120, and so on.

In various embodiments, the memory 1304 stores data 1306 in datastores and other software or executable-code components executable by the processor 1302. The datastores 1306 can include data related to the operation of the hydroplaning detection system 100, and other data. Among others, the executable-code components of various computing devices 1300 can include components associated with any of the functions described for the hydroplaning detection system 100, and an operating system for execution by the processor 1302. Where any component discussed herein is implemented in the form of software, any one of a number of programming languages can be employed such as, for example, C, C++, C#, Objective C, JAVA®, JAVASCRIPT®, Perl, PHP, VISUAL BASIC®, PYTHON®, RUBY, FLASH®, or other programming languages.

The memory 1304 stores software for execution by the processor 1302. In this respect, the terms "executable" or "for execution" refer to software forms that can ultimately be run or executed by the processor 1302, whether in source, object, machine, or other form. Examples of executable programs include, for example, a compiled program that can be translated into a machine code format and loaded into a random access portion of the memory 1304 and executed by the processor 1302, source code that can be expressed in an object code format and loaded into a random access portion of the memory 1304 and executed by the processor 1302, or source code that can be interpreted by another executable program to generate instructions in a random access portion of the memory 1304 and executed by the processor 1302, etc.

In various embodiments, the memory 1304 can include both volatile and nonvolatile memory and data storage components. Volatile components are those that do not retain data values upon loss of power. Nonvolatile components are those that retain data upon a loss of power. Thus, the memory 1304 can include, a random access memory (RAM), read-only memory (ROM), magnetic or other hard disk drive, solid-state, semiconductor, universal serial bus (USB) flash drive, memory card, optical disc (e.g., compact disc (CD) or digital versatile disc (DVD)), floppy disk, magnetic tape, or any combination thereof. In addition, the RAM can include, for example, a static random access memory (SRAM), dynamic random access memory (DRAM), or magnetic random access memory (MRAM), and/or other similar memory device. The ROM can include, for example, a programmable read-only memory (PROM), erasable programmable read-only memory (EPROM), electrically erasable programmable read-only memory (EEPROM), or other similar memory device. An executable program can be stored in any portion or component of the memory 1304.

The processor 1302 can be embodied as one or more microprocessors, one or more discrete logic circuits having logic gates for implementing various logic functions, application specific integrated circuits (ASICs) having appropriate logic gates, and/or programmable logic devices (e.g., field-programmable gate array (FPGAs), and complex programmable logic devices (CPLDs)).

If embodied in software, the executable instructions 1312 can represent one or more module or group of code that includes program instructions to implement the specified logical function(s) discussed herein. The program instructions can be embodied in the form of source code that includes human-readable statements written in a programming language or machine code that includes machine instructions recognizable by a suitable execution system, such as a processor in a computer system or other system. Thus, the processor 1302 can be directed by execution of the program instructions to perform certain processes, such as those illustrated in the flowcharts described herein. In the context of the present disclosure, a non-transitory computer-readable medium can be any tangible medium that can contain, store, or maintain any logic, application, software, or executable-code component described herein for use by or in connection with an instruction execution system.

Also, one or more of the components described herein that include software or program instructions can be embodied in a non-transitory computer-readable medium for use by or in connection with an instruction execution system, such as the processor 1302. The computer-readable medium can contain, store, and/or maintain the software or program instructions for execution by or in connection with the instruction execution system. The computer-readable medium can include a physical media, such as, magnetic, optical, semiconductor, and/or other suitable media or drives. Further, any logic or component described herein can be implemented and structured in a variety of ways. For example, one or more components described can be implemented as modules or components of a single application. Further, one or more components described herein can be executed in one computing device or by using multiple computing devices.

The flowcharts or process diagrams can be representative of certain methods or processes, functionalities, and operations of the embodiments discussed herein. Each block can represent one or a combination of steps or executions in a process. Alternatively or additionally, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as the processor 802. The machine code can be converted from the source code, etc. Further, each block can represent, or be connected with, a circuit or a number of interconnected circuits to implement a certain logical function or process step.

Although the flowcharts illustrate a specific order, it is understood that the order can differ from that which is depicted. For example, an order of execution of two or more blocks can be scrambled relative to the order shown. Also, two or more blocks shown in succession can be executed concurrently or with partial concurrence. Further, in some embodiments, one or more of the blocks can be skipped or omitted. In addition, any number of counters, state variables, warning semaphores, or messages might be added to the logical flow described herein, for purposes of enhanced utility, accounting, performance measurement, or providing troubleshooting aids, etc. Such variations, as understood for implementing the process consistent with the concepts described herein, are within the scope of the embodiments.

**Claims**

1. A system comprising:

at least one computing device comprising at least one processor; and
at least one memory comprising instructions, when executed, cause the at least one computing device to at least:

receive, by a hydroplaning computation device, from a Controller Area Network (CAN) bus of a vehicle, a plurality of dynamic vehicle parameter values measured using vehicle CAN bus sensor devices;
identify, by the hydroplaning computation device, a plurality of static vehicle parameter values for the vehicle;
generate, based at least in part on a vehicle model, the plurality of dynamic vehicle parameter values, and the plurality of static vehicle parameter values, a tire-model-based slip value, a grip utilization value, a drag force value, and wheel-speed-based slip value; and

output, by the hydroplaning computation device, hydroplaning detection status data that indicates at least one of: at least one threshold remaining contact area corresponding to the vehicle, at least one tire of the vehicle, or any combination thereof.

2. The system of claim 1, wherein the plurality of dynamic vehicle parameter values correspond to a plurality of dynamic vehicle parameters comprising at least one of: a yaw rate of the vehicle, a lateral acceleration of the vehicle, a longitudinal acceleration of the vehicle, a steering angle of the vehicle, at least one wheel speed, a vehicle speed, an engine speed, a gear position, at least one braking torque, a clutch position, at least one brake position, a throttle position, or any combination thereof; and/or wherein the plurality of static vehicle parameter values correspond to a plurality of static vehicle parameters comprising at least one of: vehicle mass, vehicle inertia moment along a vertical axis, vehicle front track, vehicle rear track, center of gravity height, wheel inertia along a lateral axis, vehicle front section area, aerodynamic coefficient associated with longitudinal travel of the vehicle, or any combination thereof.

3. The system of claim 1 or 2, wherein the tire-model-based slip value comprises a slip value calculated using a Pacejka formula tire model.

4. The system of at least one of the previous claims, wherein the drag force is calculated using a two dimensional vehicle equilibrium model.

5. The system of at least one of the previous claims, wherein the wheel-speed-based slip value is calculated using a wheel speed, a yaw rate, a steering angle, and a velocity along a direction of travel.

6. The system of at least one of the previous claims, wherein the plurality of static vehicle parameter values are associated with at least one of: a make of the vehicle, a model of the vehicle, a configuration of the vehicle, or any combination thereof.

7. A method comprising:

receiving, by a hydroplaning computation device, from a Controller Area Network (CAN) bus of a vehicle, a plurality of dynamic vehicle parameter values measured using vehicle CAN bus sensor devices;

identifying, by the hydroplaning computation device, a plurality of static vehicle parameter values for the vehicle; generating, based at least in part on a vehicle model, the plurality of dynamic vehicle parameter values, and the plurality of static vehicle parameter values, a tire-model-based slip value, a grip utilization value, a drag force value, and wheel-speed-based slip value; and outputting, by the hydroplaning computation device, hydroplaning detection status data that indicates at least one of: at least one threshold remaining contact area corresponding to the vehicle, at least one tire of the vehicle, or any combination thereof.

8. The method of claim 7, wherein the plurality of dynamic vehicle parameter values correspond to a plurality of dynamic vehicle parameters comprising at least one of: a yaw rate of the vehicle, a lateral acceleration of the vehicle, a longitudinal acceleration of the vehicle, a steering angle of the vehicle, at least one wheel speed, a vehicle speed, an engine speed, a gear position, at least one braking torque, a clutch position, at least one brake position, a throttle position, or any combination thereof; and/or wherein the plurality of static vehicle parameter values correspond to a plurality of static vehicle parameters comprising at least one of: vehicle mass, vehicle inertia moment along a vertical axis, vehicle front track, vehicle rear track, center of gravity height, wheel inertia along a lateral axis, vehicle front section area, aerodynamic coefficient associated with longitudinal travel of the vehicle, or any combination thereof.

9. The method of claim 7 or 8, wherein the tire-model-based slip value comprises a slip value calculated using a Pacejka formula tire model.

10. The method of at least one of the claims 7 to 9, wherein the drag force is calculated using a two dimensional vehicle equilibrium model.

11. The method of at least one of the claims 7 to 10, wherein the wheel-speed-based slip value is calculated using a wheel speed, a yaw rate, a steering angle, and a velocity along a direction of travel.

12. The method of at least one of the claims 7 to 11, wherein the plurality of static vehicle parameter values are associated with at least one of: a make of the vehicle, a model of the vehicle, a configuration of the vehicle, or any combination thereof.

13. A non-transitory computer readable medium comprising instructions executable by at least one computing device, the instructions, when executed by the at least one computing device, causing the at least one computing device to at least:

receive, by a hydroplaning computation device, from a Controller Area Network (CAN) bus of a vehicle, a plurality of dynamic vehicle parameter values measured using vehicle CAN bus sensor devices;

identify, by the hydroplaning computation device, a plurality of static vehicle parameter values for the vehicle; generate, based at least in part on a vehicle model, the plurality of dynamic vehicle parameter values, and the plurality of static vehicle parameter values, a tire-model-based slip value, a grip utilization value, a drag force value, and wheel-speed-based slip value; and output, by the hydroplaning computation device, hydroplaning detection status data that indicates at least one of: at least one threshold remaining contact area corresponding to the vehicle, at least one tire of the vehicle, or any combination thereof.

14. The non-transitory computer readable medium of claim 13, wherein the tire-model-based slip value comprises a slip value calculated using a Pacejka formula tire model; and/or wherein the drag force is calculated using a two dimensional vehicle equilibrium model.

15. The non-transitory computer readable medium of claim 13 or 14, wherein the wheel-speed-based slip value is calculated using a wheel speed, a yaw rate, a steering angle, and a velocity along a direction of travel.

**FIG. 1**

EP 4 585 482 A1

$$m\dot{V}_x = \sum Fx_{ij} - F_r(Areo, Rolling) - F_{hydro} \implies m\dot{V}_x < m\dot{V}_{x\,model}$$

**FIG. 2**

$$F_D = m(a_{x_{model}} - a_{x_{IMU}})$$

**FIG. 3**

EP 4 585 482 A1

$$M_b - I_z\dot{\omega} - mgRes = F_x * R \Rightarrow a_{x_{model}} \neq a_{x_{IMU}}$$

**FIG. 4**

**FIG. 5**

**FIG. 6**

503

Yaw-Rate LatAccel LongAccel SteerAng → Tire Force Calculation (In tire reference frame) 603

$F_{xi,j}$, $F_{zi,j}$, $F_{yi,j}$

Tire Model (BCDE Pacejka formula) 609 → Tire Model based Slip

Friction Calculation 612 → Grip Utilization

EngSpeed EngTorque GearPos → Power Train Model 606 → Wheel Torque / Wheel Speed → Tire Equilibrium 615 → Steering Angle, $F_{xi,j}(PWT)$ → 2D Vehicle Equilibrium 618 → LongAcc(PWT), LongAcc → + / − → Drag Force

Wheel Speed, Yaw Rate, Steering Angle, Vx → Slip Ratio Calculation 621 → Wheel Speed based Slip

EP 4 585 482 A1

FIG. 7A

506

Hydro Probability

Hydro Probability

Hydro Probability

Hydro Probability

M A X

>
FullHydro Threshold

Yes → Full hydro warning

No

>
PartialHydro Threshold

Yes → Partial hydro warning

No

No hydroplaning

521

> th

Yes → Drag function relationship → Remaining contact area

No

No hydroplaning

# FIG. 7B

## FIG. 8

Longitudinal Acceleration →

Covariance Matrix →

Best Wheel Speed →

**Kalman Filter 803** → Reference speed →

## FIG. 9

903

Drag > FullHydroDragLevel →

Slip ≤ FullHydroDragLevel →

Grip < FullHydroGripLevel →

ClutchPosition==True →

906

Drag > PartialHydroDragLevel →

Slip < PartialHydroDragLevel →

Grip < PartialHydroGripLevel →

ClutchPosition==True →

## FIG. 10

1003

Torque on Rear Tires → Use Kalman Filter for vehicle reference speed and slip, Use RWD preconditions and logic

Torque on All Tires → Use Kalman Filter for vehicle reference speed and slip, Use FWD preconditions and logic

**FIG. 11**

EP 4 585 482 A1

FIG. 12

EP 4 585 482 A1

Computing Device(s) 1300

Memory 1304

Processor(s) 1302

Datastores 1306

Executable Instructions 1312

1308

# FIG. 13

Europäisches
Patentamt

European
Patent Office

Office européen
des brevets

# EUROPEAN SEARCH REPORT

**Application Number**

EP 24 21 6845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/275711 A1 (EASY RAIN I S P A [IT]) 5 January 2023 (2023-01-05) * page 14, line 3 - page 28, line 8; figures 1-12 * | 1-15 | INV. B60W40/064 B60W40/10 B60W40/12 |
| X | FICHTINGER ANDREAS ET AL: "Aquaplaning Detection Using Effect-Based Methods: An Approach Based on a Minimal Set of Sensors, Electronic Stability Control, and Drive Torques", IEEE VEHICULAR TECHNOLOGY MAGAZINE, IEEE, US, vol. 16, no. 3, 23 June 2021 (2021-06-23), pages 20-28, XP011872266, ISSN: 1556-6072, DOI: 10.1109/MVT.2021.3085536 [retrieved on 2021-08-15] * page 20 - page 28; figures 1-10 * | 1-15 | |
| A | Joop P Pauwelussen ET AL: "Tyre dynamics, tyre as a vehicle component Part 1.: Tyre handling performance", , 16 October 2007 (2007-10-16), XP055451691, Retrieved from the Internet: URL:http://laroverket.com/wp-content/uploads/2015/03/tyre_as_car_component.pdf [retrieved on 2018-02-15] * Sections 1.4 to; page 5 - page 47 * | 1-15 | TECHNICAL FIELDS SEARCHED (IPC) B60W B60T |

The present search report has been drawn up for all claims

| Place of search | Date of completion of the search | Examiner |
|---|---|---|
| Munich | 5 June 2025 | Engelhardt, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 21 6845

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | Publication date | Patent family member(s) | Publication date |
|---|---|---|---|
| WO 2023275711 A1 | 05-01-2023 | CN 117693457 A | 12-03-2024 |
| | | EP 4363290 A1 | 08-05-2024 |
| | | JP 2024525427 A | 12-07-2024 |
| | | KR 20240028516 A | 05-03-2024 |
| | | US 2024294172 A1 | 05-09-2024 |
| | | WO 2023275711 A1 | 05-01-2023 |

EPO FORM P0459

For more details about this annex : see Official Journal of the European Patent Office, No. 12/82